# EUROPÄISCHE PATENTSCHRIFT

(11) **EP 1 185 431 B1**
(45) Veröffentlichungstag und Bekanntmachung des Hinweises auf die Patenterteilung: **14.08.2013**
(21) Anmeldenummer: 01913620.9
(22) Anmeldetag: 13.02.2001
(51) Int. Cl.: B60K 31/04

(54) **VERFAHREN ZUR UNTERBRECHUNG EINER GESCHWINDIGKEITS- ODER ABSTANDSREGELUNG EINES REGELSYSTEMS EINES KRAFTFAHRZEUGS**
METHOD FOR INTERRUPTING SPEED OR DISTANCE ADJUSTMENT IN THE CONTROL SYSTEM OF A MOTOR VEHICLE
PROCEDE POUR INTERROMPRE UNE REGULATION DE VITESSE OU DE DISTANCE D'UN SYSTEME DE REGULATION D'UN VEHICULE AUTOMOBILE

(30) Priorität: 28.03.2000 DE 10015301
(43) Veröffentlichungstag der Anmeldung: 13.03.2002
(73) Patentinhaber: ROBERT BOSCH GMBH, 70442 Stuttgart (DE)
(72) Erfinder: HELLMANN, Manfred, 71706 Hardthof (DE); BECK, Thilo, 70499 Stuttgart (DE)
(86) Internationale Anmeldenummer: PCT/DE2001/000538
(87) Internationale Veröffentlichungsnummer: WO 2001/072544

(56) Entgegenhaltungen:
- EP-A- 0 874 149
- EP-A- 0 982 172
- EP-A- 0 992 412
- DE-A- 19 913 620

## Beschreibung

### Stand der Technik

Die Erfindung geht aus von einem Verfahren zur Unterbrechung einer Geschwindigkeits- oder Abstandsregelung eines Regelsystems eines Kraftfahrzeugs nach der Gattung des Hauptanspruchs.

Regelsysteme sind per se sowohl für die Regelung einer vorgegebenen Fahrgeschwindigkeit (Fahrgeschwindigkeitsregler FGR) oder zur Regelung eines Fahrabstandes, beispielsweise ein Abstandswarner mit Radar (Adaptive Cruse Control, ACC) bekannt. Diese Systeme regeln eine vorgegebene Fahrgeschwindigkeit oder einen Mindestabstand zu einem vorausfahrenden Fahrzeug, ohne daß der Fahrer eingreifen muß. Allerdings hat in jedem Fall der Fahrer des Fahrzeugs die Kontrolle über alle Regelsysteme und kann mittels eines entsprechenden Schalters die laufende Regelung abschalten. Befindet sich das Regelsystem gerade in einer Beschleunigungs- oder Bremsphase, dann wird durch das Abschalten dieser Vorgang mehr oder weniger abrupt unterbrochen, was eine entsprechende Beeinflussung des Fahrkomforts bewirkt.

Aus der DE 199 13 620 A1 ist eine Abstandsregeleinrichtung für Fahrzeuge bekannt, bei der mittels Sensoren die Geschwindigkeit des eigenen Fahrzeugs sowie der Abstand zum vorherfahrenden Fahrzeug gemessen wird und die Geschwindigkeit des eigenen Fahrzeugs im Sinne einer Abstandskonstantregelung geregelt wird. Unterschreitet die Fahrzeuggeschwindigkeit einen festgesetzten, niedrigsten Grenzwert, so wird die Regelung abgeschaltet.

Die EP 0 874 149 A2 zeigt eine Einrichtung zur Erhöhung der Sicherheit eines Fahrzeugs auf, indem die Drehrnomentänderung hinsichtlich ihrer zeitlichen Ableitung begrenzt wird, falls durch diesen Drehmomentenruck die Fahrstabilität des Fahrzeugs auf der Straße gefährdet wird.

### Vorteile der Erfindung

Das erfindungsgemäße Verfahren zur Unterbrechung einer Geschwindigkeits- oder Abstandsregelung eines Regelsystems mit den kennzeichnenden Merkmalen des Hauptanspruchs hat demgegenüber den Vorteil, daß nach dem Betätigen eines entsprechenden Schalters die augenblickliche aktive Regelung nicht abrupt abgebrochen wird, sondern mittels eines vorgegebenen Algorithmus ein Sollwert für die Beschleunigung sowohl beim Abbremsen als auch beim Beschleunigen angestrebt wird. Dieser Algorithmus ist so gewählt, daß ein weicher Übergang vom Regelbetrieb in einen Standby-Modus erzielt wird.

Durch die in den abhängigen Ansprüchen aufgeführten Maßnahmen sind vorteilhafte Weiterbildungen und Verbesserungen des im Hauptanspruch angegebenen Verfahrens möglich. Besonders vorteilhaft ist, daß der Sollbeschleunigungswert im Antriebsfall nach dem vorgegebenen Algorithmus reduziert bzw. im Bremsfall erhöht wird. Dadurch wird vorteilhaft erreicht, daß beispielsweise nach dem Abschalten einer vorgegebenen Sollgeschwindigkeit das Fahrzeug ohne Schüttel- oder Ruckbewegungen in einen stationären Fahrbetrieb übergeht. Entsprechend wird im Bremsfall erreicht, daß lästige Nickbewegungen des Fahrzeugs unterbleiben. Insbesondere bei Nachtfahrten wird dadurch vermieden, daß der Scheinwerferkegel durch die Nickbewegungen auf- und abschwingt und gegebenenfalls entgegenkommende Verkehrsteilnehmer geblendet werden können.

Eine günstige Methode ist ein linearer Übergang vom Regelbetrieb in den Standby-Modus mittels einer linearen Funktion. In alternativer Ausgestaltung ist auch vorsehbar, eine entsprechende Rampenfunktion mit angepaßten Stufen zu verwenden.

Im Bremsfall wirkt vorteilhaft das Regelsystem auf eine Bremseinheit, beispielsweise einem ABS- oder ESP-System (elektronisches Stabilitätsprogramm), das den Bremsdruck für eine vorgegebene Sollverzögerung vorgibt. So kann vorteilhaft nach dem vorgegebenen Algorithmus die Bremsverzögerung durchgeführt werden, bis ein minimaler Bremsdruck im Breressystem erreicht ist. Erst danach wird die Regelung abgeschaltet, da beim Bremsdruck im Bereich von 0 keine Bremsverzögerung mehr auftritt.

Entsprechend wird im Antriebsfall bei Unterschreiten einer vorgegebenen minimalen Beschleunigungsgrenze die Regelung abgeschaltet, so daß auch in diesem Fall ein weicher Übergang zum stationären Fahrbetrieb des Fahrzeugs stattfindet.

Da viele moderne Fahrzeuge mit einem automatischen Getriebe ausgestattet sind, ist es vorteilhaft, bis zum Abschalten des Regelsystems ein Umschalten in einen anderen Getriebegang zu verhindern. Dadurch wird beispielsweise beim Herunterschalten ein unnötiges Aufheulen des Motors vorteilhaft vermieden.

Als günstig wird weiter angesehen, daß das Verfahren in Form eines Software-Programms in das Regelsystem implementiert wird, da das Software-Programm leicht erstellbar ist und andererseits an einzelne Fahrzeugtypen einfach adaptiert werden kann. Um Kosten und Aufwand zu sparen, wird das Software-Programm vorteilhaft in ein bereits vorhandenes Steuergerät des Fahrzeugs eingebaut. Dieses kann beispielsweise ein ESP-, ein Abstandsregler oder ein FGR-System sein.

### Zeichnung

Ein Ausführungsbeispiel der Erfindung ist in der Zeichnung dargestellt und in der nachfolgenden Beschreibung näher erläutert. Figur 1 zeigt ein Blockschaltbild, Figur 2 zeigt ein Diagramm für einen Regelalgorithmus im Antriebsfall und Figur 3 zeigt ein Diagramm für einen Regelalgorithmus im Bremsfall.

### Beschreibung des Ausführungsbeispiels

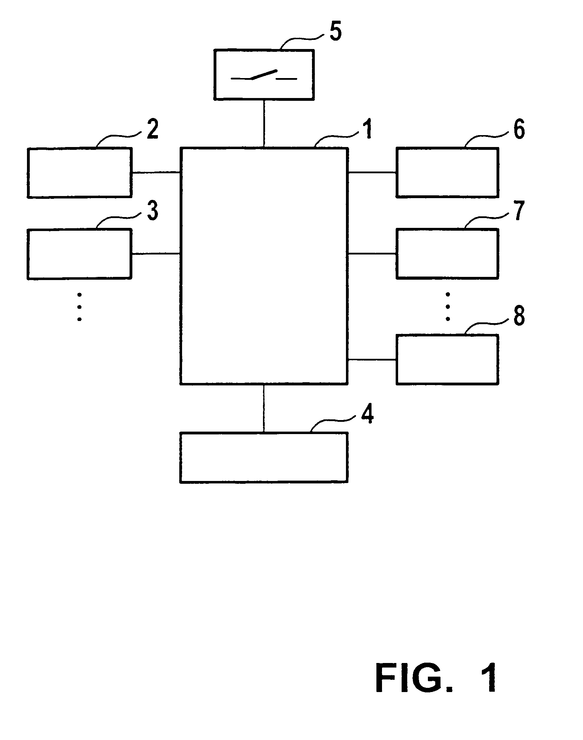

Das Blockschaltbild der Figur 1 zeigt eine Steuerung 1, die beispielsweise eingangsseitig mit einem Geschwindigkeitssensor 2 und einem Abstandssensor 3 verbunden ist. Der Geschwindigkeitssensor 2 ist vorzugsweise ein Radsensor, der für ein vorhandenes ABS-Bremssystem benutzt wird. Als Abstandssensor 3 sind sowohl optische - wie auch auf Radar basierende Sensoren verwendbar. Diese Sensoren sind per se bekannt und müssen daher nicht näher erläutert werden.

Die Steuerung 1 enthält alle Elemente, die für eine Geschwindigkeits- oder Abstandsregelung erforderlich sind. Technische Einzelheiten sind ebenfalls bekannt. Ausgangsseitig greift die Steuerung 1 auf eine Bremseinheit 6 bzw. auf eine Motorsteuerung 7 zu. Die Bremseinheit 6 ist beispielsweise ABS- oder ein ESP-System, das ebenfalls bekannt ist. Des Weiteren sind Motorsteuerungen 7 bekannt. An entsprechende Ausgänge der Steuerung 1 können weitere Steuergeräte angeschlossen sein. Vorteilhaft ist, beispielsweise die Steuerung 1 mit einer Getriebesteuerung 8 zu verbinden. Beim Übergang vom geregelten in den nicht geregelten Betrieb wird vorteilhaft ein Schalten des Getriebes mittels der Getriebesteuerung 8 verhindert.

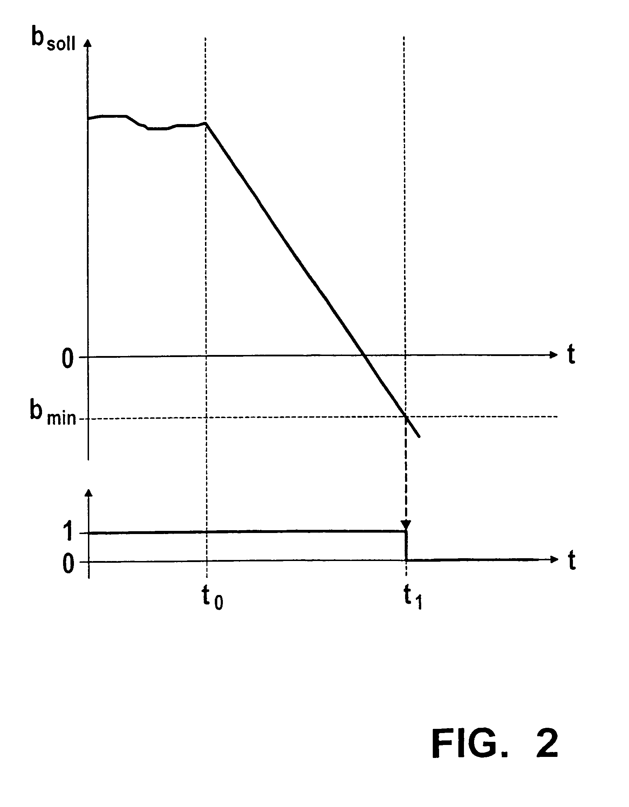

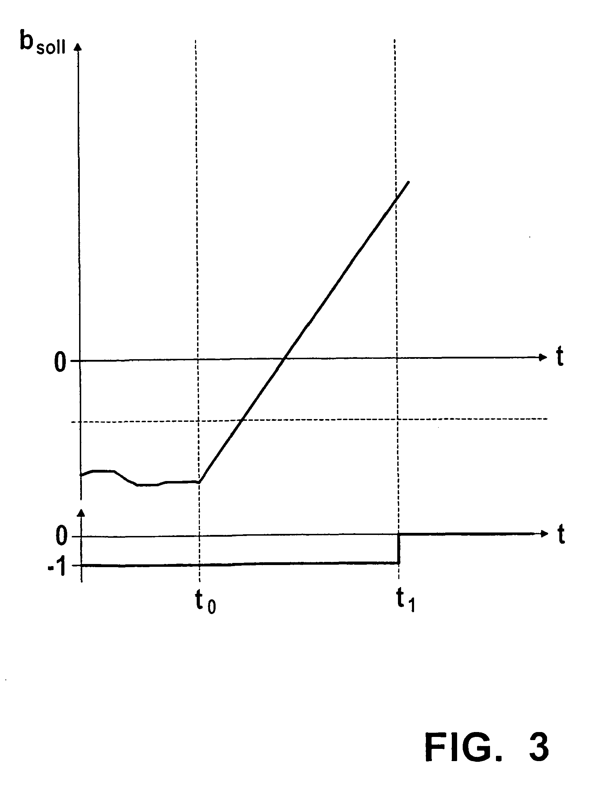

Die Funktionsweise der Erfindung wird anhand der Figuren 2 und 3 näher erläutert. Die Figur 2 zeigt eine Situation, wenn das Regelsystem im Antriebsfall versucht, eine vorgegebene Sollbeschleunigung bSoll bzw. -Geschwindigkeit einzuhalten und dann zu einem Zeitpunkt t0 der Fahrer den Schalter 5 betätigt, um die aktive Regelung abzuschalten. Nach dem Abschalten zum Zeitpunkt t0 erfolgt erfindungsgemäß die Verwendung des vorgegebenen Algorithmus. Gemäß der Figur 2 wird nun mit einer linearen Funktion die Fahrzeuggeschwindigkeit reduziert, bis ein minimaler Beschleunigungswert bmin zum Zeitpunkt t1 erreicht wird. Danach wird das Regelsystem 10 abgeschaltet und befindet sich somit im Standby-Modus. Dieser Vorgang ist auf der unteren Kurve noch mal erkennbar. Bis zum Zeitpunkt t1 ist das Regelsystem 10 noch aktiv eingeschaltet (logisch 1), während es nach dem Zeitpunkt t1 ausgeschaltet ist (logisch 0). Dieses wird durch die Sprungfunktion angezeigt.

In alternativer Ausgestaltung der Erfindung ist vorgesehen, für den Algorithmus anstelle der Geradenfunktion eine Rampenfunktion mit entsprechend kleinen Rampenschritten oder dergleichen zu verwenden.

Analog hierzu zeigt Figur 3 ein Diagramm für einen Regelalgorithmus im Bremsfall. Auch in diesem Fall wird davon ausgegangen, daß sich das Regelsystem 10 im aktiven Regelmodus befindet und zum Zeitpunkt t0 der Fahrer des Fahrzeugs den Schalter 5 betätigt. Nach dem Zeitpunkt t0 wird das Fahrzeug weniger stark abgebremst, was durch die positive Beschleunigungskurve dargestellt wird. Zum Zeitpunkt t1 geht das Regelsystem 10 in den Standby-Modus über, so daß zu diesem Zeitpunkt keine Bremswirkung mehr auftritt. Der Bremsdruck im Bremssystem ist dann 0. Dieses Verhalten wird ebenfalls an der unteren Kurve gezeigt.

## Patentansprüche

1. Verfahren zur Unterbrechung einer Geschwindigkeits- oder Abstandsregelung eines Regelsystems (10) eines Kraftfahrzeugs, **dadurch gekennzeichnet, dass** wenn der Fahrer durch Betätigen eines Schalters (5) den momentanen Regelmodus unterbricht, dass das Regelsystem (10) im Antriebsfall einen Sollbeschleunigungswert (bsoll) nach einem vorgegebenen Algorithmus reduziert, bevor es die Regelung abschaltet, und im Bremsfall den Sollbeschleunigungswert (bsoll) erhöht, bevor es die Regelung abschaltet, wodurch ein weicher Übergang vom Regelbetrieb in einen Standby-Modus erzielt wird.

2. Verfahren nach Anspruch 1, **dadurch gekennzeichnet, dass** der Algorithmus eine lineare Funktion aufweist.

3. Verfahren nach einem der vorhergehenden Ansprüche, **dadurch gekennzeichnet, dass** der Algorithmus eine Rampenfunktion aufweist.

4. Verfahren nach einem der vorhergehenden Ansprüche, **dadurch gekennzeichnet, dass** das Regelsystem (10) auf eine Bremseinheit (6) einwirkt, die einen Bremsdruck in einem Bremssystem regelt.

5. Verfahren nach Anspruch 4, **dadurch gekennzeichnet, dass** das Regelsystem (10) im Bremsfall bei Unterschreiten eines minimalen Bremsdruckes die Regelung abschaltet.

6. Verfahren nach einem der vorhergehenden Ansprüche, **dadurch gekennzeichnet, dass** das Abstandsregelsystem (10) im Antriebsfall beim Unterschreiten einer minimalen Beschleunigung (bmin) die Regelung abschaltet.

7. Verfahren nach einem der vorhergehenden Ansprüche, **dadurch gekennzeichnet, dass** das Regelsystem (10) bis zum Abschaltzeitpunkt (t1) eine Umschaltung eines Getriebes blockiert.

8. Verfahren nach einem der vorhergehenden Ansprüche, **dadurch gekennzeichnet, dass** das Regelsystem (10) ein Software-Programm enthält mit dem ein weiches Abschalten der Regelung ermöglicht wird.

9. Verfahren nach Anspruch 8, **dadurch gekennzeichnet, dass** das Software-Programm Bestandteil eines in einem Kraftfahrzeug vorhanden Steuergerät ist.

## Claims

1. Method for interrupting speed or distance adjustment in a control system (10) of a motor vehicle, **characterized in that** when the driver interrupts the instantaneous control mode by activating a switch (5), the control system (10) in the case of driving reduces a setpoint acceleration value (bsetp) according to a predefined algorithm before it switches off the control, and in the case of braking it increases the setpoint acceleration value (bsetp) before it switches off the control, as a result of which a gentle transition from the control mode into a standby mode is brought about.

2. Method according to Claim 1, **characterized in that** the algorithm has a linear function.

3. Method according to one of the preceding claims, **characterized in that** the algorithm has a ramp function.

4. Method according to one of the preceding claims, **characterized in that** the control system (10) acts on a brake unit (6) which controls a brake pressure in a brake system.

5. Method according to Claim 4, **characterized in that** in the case of braking the control system (10) switches off the control when a minimum brake pressure is undershot.

6. Method according to one of the preceding claims, **characterized in that** in the case of driving the distance control system (10) switches off the control when a minimum acceleration (bmin) is undershot.

7. Method according to one of the preceding claims, **characterized in that** the control system (10) blocks shifting of a transmission up to the switch-off time (t1).

8. Method according to one of the preceding claims, **characterized in that** the control system (10) contains a software program with which gentle switching off of the control is made possible.

9. Method according to Claim 8, **characterized in that** the software program is a component of a control unit which is present in a motor vehicle.

## Revendications

1. Procédé d'interruption de la régulation de vitesse ou de distance du système de régulation (10) d'un véhicule automobile,
**caractérisé en ce que**
lorsque le conducteur interrompt le mode de régulation en cours par actionnement d'un commutateur (5), au cas où l'entraînement est actif, le système de régulation (10) réduit la valeur (bSoll) d'accélération de consigne selon un algorithme prédéterminé avant de débrancher la régulation et en cas de freinage, augmente la valeur (bSoll) de l'accélération de consigne avant de débrancher la régulation, ce qui permet d'obtenir une transition plus douce entre le fonctionnement régulé et le mode d'attente.

2. Procédé selon la revendication 1, **caractérisé en ce que** l'algorithme présente une fonction linéaire.

3. Procédé selon l'une des revendications précédentes, **caractérisé en ce que** l'algorithme présente une fonction de rampe.

4. Procédé selon l'une des revendications précédentes, **caractérisé en ce que** le système de régulation (10) agit sur une unité de freinage (6) qui régule la pression de freinage du système de freinage.

5. Procédé selon la revendication 4, **caractérisé en ce qu'**en cas de freinage, le système de régulation (10) débranche la régulation lorsque la pression de freinage est inférieure à une valeur minimale.

6. Procédé selon l'une des revendications précédentes, **caractérisé en ce que** lorsque l'entraînement est actif, le système (10) de régulation de distance débranche la régulation lorsque l'accélération est inférieure à une valeur minimale (bmin).

7. Procédé selon l'une des revendications précédentes, **caractérisé en ce que** le système de régulation (10) bloque le changement de rapport de la transmission jusqu'à l'instant de débranchement (t1).

8. Procédé selon l'une des revendications précédentes, **caractérisé en ce que** le système de régulation (10) contient un programme informatique qui permet de débrancher la régulation avec douceur.

9. Procédé selon la revendication 8, **caractérisé en ce que** le programme informatique fait partie d'un appareil de commande prévu dans le véhicule automobile.
